# FASCICULE DE BREVET EUROPEEN

(11) **EP 0 596 796 B1**
(45) Date de publication et mention de la délivrance du brevet: **18.06.1997**
(21) Numéro de dépôt: 93402692.3
(22) Date de dépôt: 03.11.1993
(51) Int. Cl.: B23K 15/00, B23K 26/08, B23K 26/00, B23K 37/04

(54) **Procédé d'assemblage par soudage d'un disque garni d'ailettes par faisceau d'énergie**
Verfahren zum Schweissen von beschaufelte Rotorscheiben mit einem Energiestrahl hoher Leistungsdichte
Method for welding a bladed rotor disk using a beam of radiant energy

(30) Priorité: 04.11.1992 FR 9213169
(43) Date de publication de la demande: 11.05.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Lechervy, Pierre Marc Serge, F-91700 Sainte Genevieve des Bois (FR); Sohier, Bernard Philippe Cornil, F-77176 Savigny le Temple (FR)

(56) Documents cités:
- DE-A- 2 130 127
- FR-A- 2 390 242
- FR-A- 2 673 558
- US-A- 4 736 504
- DATABASE WPI Week 8505, 15 Juin 1984 Derwent Publications Ltd., London, GB; AN 85-029999 & SU-A-1 097 810 (KHARK TURBINE WKS TSNIITMASH ASSOC) 15 Juin 1984
- DATABASE WPI Section Ch, Week 9301, Derwent Publications Ltd., London, GB; Class M23, AN 93-007300 & SU-A-1 712 104 (PATON ELECTROWELDING INST) 15 Février 1992

## Description

L'invention se rapporte à un procédé d'assemblage par soudage d'un disque de rotor de turbomachine garni d'ailettes.

De nombreuses machines du genre des turbines et des compresseurs possèdent des étages d'aubes constitués de disques sur lesquels les ailettes sont assemblées par soudage. Ce procédé connu est toutefois difficile à maîtriser correctement à cause du grand nombre d'ailettes de petite taille qui imposent une grande précision et un travail de montage et de soudage soigneux, que les déformations produites par l'échauffement au soudage peuvent toujours compromettre.

Dans le cas où les ailettes sont reparties à la périphérie de couronnes dans laquelle elles s'emboitent dans des logements, FR-A-2 673 558 décrit une installation pour leur soudage comportant notamment un capteur de repérage commandant la rotation d'un support de pièce, mais l'adaptation à l'assemblage d'ailettes sur un disque n'est pas envisagée.

Le procédé conforme à l'invention permet d'échapper à ces inconvénients et de réaliser rapidement et facilement l'assemblage des ailettes sur le disque, que ce soit de toutes les ailettes à la fabrication du disque ou de quelques-unes d'entre elles seulement à sa réparation.

Les ailettes sont en fait composées d'un pied et d'une pale. Les pieds sont de courts tronçons d'une pièce avec le disque et fabriqués avec lui. Les pales constituent l'essentiel des ailettes et sont forgées séparément avant d'être soudées aux pieds. Le procédé consiste à installer le disque et les pales sur un gabarit tournant muni de moyens de fixation du disque et des pales, les pales touchant les pieds à des surfaces ce jonction planes, à tourner le gabarit pour placer les pales successivement devant un faisceau d'énergie qui traverse les surfaces de jonction et soude les pales aux pieds pour assembler les ailettes. Des écrans sont de plus installés entre les pales à assembler et d'autres pales pour intercepter le faisceau après qu'il a traversé les surfaces de jonction respectives. Toutes ces mesures permettent de maintenir fermement et avec précision les pales en place et de les souder séparément sans risque que le faisceau ne touche des portions voisines de l'assemblage et ne les détériore ou ne produise des dilatations et des déformations.

Si toutes les pales doivent être assemblées, une application particulière du procédé consiste à installer les écrans dans une première moitié des invervalles entre les pales, une seconde moitié des intervalles étant vide, et à faire passer le faisceau à travers les intervalles de la seconde moitié pour assembler une première moitié des pales, puis à retirer les écrans et à les installer dans la seconde moitié des intervalles, et à faire passer le faisceau à travers les intervalles de la première moitié pour assembler la seconde moitié des pales.

Les moyens de fixation peuvent comprendre des surfaces ponctuelles sur lesquelles les pales sont appuyées par des endroits opposés aux jonctions, c'est-à-dire au bout des ailettes. Ils peuvent comprendre encore des équerres sur lesquelles trois paires de facettes des pieds et des pales, proches des jonctions, sont appuyées. Une solution différente consiste à utiliser des manchons qui entourent au moins partiellement une portion des pieds et une portion des pales proche des jonctions, trois paires de facettes des manchons étant appuyées sur trois facettes de chacune desdites portions. Ou bien les manchons peuvent appartenir soit aux pieds, soit aux pales.

Une autre solution sensiblement de même valeur consiste à relier les pales aux pieds par des pions de centrage.

On va maintenant décrire l'invention plus en détail à l'aide de réalisations concrètes illustrées sur les figures dont l'énumération suit à titre non limitatif :
- la figure 1 représente une pale posée sur son pied ;
- la figure 2 représente le gabarit d'assemblage ;
- la figure 3 illustre le mode de montage à la jonction d'un pied et d'une pale ;
- les figures 4 et 5, 6 et 7, 8 et 9, et 10 et 11 représentent quatre autres modes de montage à la jonction d'un pied et d'une pale, et
- la figure 12 illustre la façon de souder conforme à l'invention.

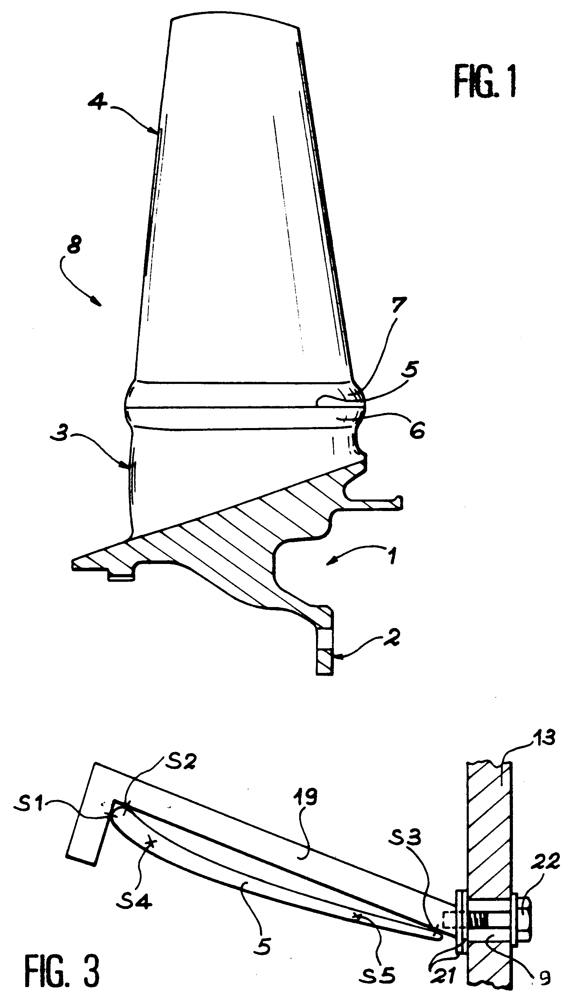

La figure 1 représente un disque 1 de rotor, vu en demi-coupe longitudinale ; il est destiné à être assemblé à d'autres éléments du rotor et en conséquence muni de moyens tels qu'une bride 2 située sur sa face interne. Le disque 1 est fabriqué par des procédés connus avec des pieds 3 d'ailettes répartis sur sa périphérie, et sur lesquels il convient de fixer les pales 4 d'ailettes dont les dimensions, l'élancement et la forme particulière généralement vrillée obligent à les construire séparément, par d'autres procédés que le disque 1, et à les assembler ensuite à lui.

L'assemblage se fait par une surface de jonction 5 avantageusement plane par laquelle des faces, usinées avec soin, du pied 3 et de la pale 4 se touchent. Le pied 3 et la pale 4 sont chacun munis à cet endroit d'une collerette, respectivement 6 et 7 dont les fonctions sont d'accroître la surface de jonction 5 et de constituer une portion de plus forte section et de plus grande corde des ailettes, dont l'usinage permettra ensuite de retirer les défauts superficiels de la soudure, ainsi que les surlongueurs nécessaires au démarrage et à l'arrêt de la soudure. L'ailette est globalement désignée par 8.

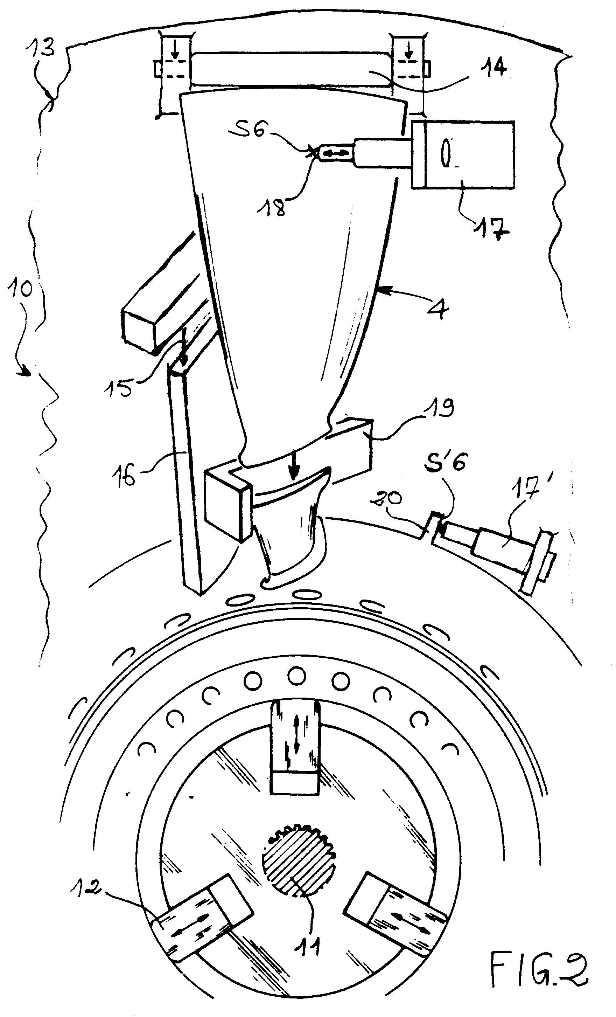

On voit sur la figure 2 comment le disque 1 et les pales 4 sont montés sur un gabarit 10 à leur position mutuelle d'assemblage. Le gabarit 10 comprend un axe 11 tournant d'angles de valeur déterminée sous l'action d'un dispositif de positionnement angulaire, non représenté. L'axe 11 entraîne des mors 12 de centrage du disque 1, et le disque 1 lui-même. Il entraîne aussi une charpente 13, représentée schématiquement et en forme de disque qui porte des équerres 19 amovibles qui touchent les collerettes 6 et 7, des repères de position angulaire 17 terminés par des hémisphères 18 de butée, des patins 14 qui compriment les pales 4 sur les pieds 3, et d'autres patins 15 qui positionnent des écrans 16 amovibles sur le disque 1 entre des ailettes 8 consécutives.

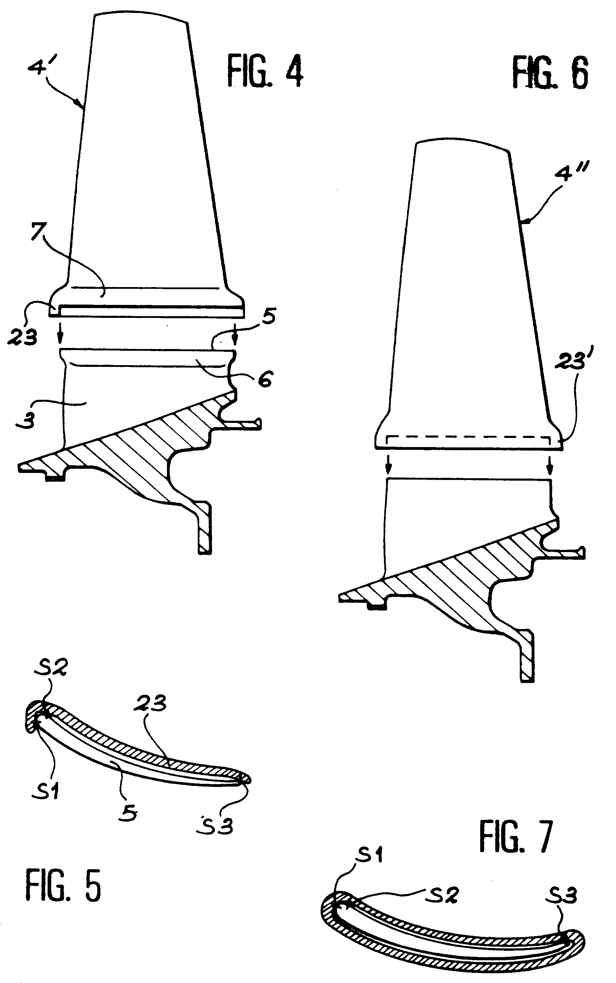

Dans cette réalisation de l'invention et comme on l'a représenté sur la figure 3, les collerettes 6 et 7 présentent chacune trois paires de facettes S1, S2 et S3, situées pour la première à une extrémité longitudinale des collerettes 6 et 7 au bord arrondi des ailettes 8, et pour les deux autres, aux deux extrémités des collerettes du côté d'intrados des ailettes 8. Ces trois paires de facettes S1 à S3 sont usinées avec une grande précision ; un côté de l'équerre 19 est appuyé sur la paire de facettes S1 et l'autre sur les deux autres paires S2 et S3. Comme les faces de la pale 4 et du pied 3 qui se touchent sont longues, étroites et aplanies par un usinage, elles fournissent l'équivalent d'un appui par deux points ou deux autres paires de facettes S4 et S5.

Le placement exact des pales 4 sur les pieds 3 et le disque 1 est assuré par le contact d'une dernière facette S6, à l'extrémité opposée à la surface de jonction 5, sur un hémisphère de butée 18 respectif. Un autre repère de position angulaire 17' est prévu pour le disque 1 ; il s'appuie sur une facette S'6 d'un taquet 20 établi à cet effet sur le disque 1. Le procédé de montage peut donc consister à placer le disque 1 autour des mors 12 en faisant toucher le repère de position angulaire 17' à la facette S'6, puis les équerres 19 sont fixées sur la charpente 13 à un emplacement qui les fait toucher les facettes S1 à S3 (emplacement réglable par exemple par des cales 21 insérées entre les équerres 19 et la charpente 13 et par le jeu des vis de fixation 22 des équerres 19 dans les perçages 9 de la charpente 13), puis les pales 4 sont installées et immobilisées au moyen des patins 14. Les équerres 19 sont alors retirées, et les écrans 16 sont mis en place au moyen des patins 15.

Une conception équivalente, représentée sur les figures 4 et 5, consiste à utiliser des pales 4' dont la collerette 7 est complétée par un rebord 23 inférieur qui vient entourer partiellement la collerette 6 des pieds 3, à la position approximative des équerres 19 qui ne sont pas utilisées ici. On retrouve trois paires de facettes S1, S2 et S3 pour contribuer au placement exact des pales 4', mais ici elles ne s'appuient pas sur une pièce mitoyenne : les facettes S1, S2 et S3 de la pale 4' sont situées sur la face intérieure du rebord 23 et touchent directement les facettes S1, S2 et S3 de même numéro du pied 3. Le rebord peut aussi être fermé comme on le voit bien sur les figures 6 et 7 ou il est référencé par 23' sur une pale 4''. Il entoure alors complètement le bout du pied 3 avec un jeu qui lui permet de ne le toucher qu'aux paires de facettes S1, S2 et S3. De tels rebords 23' formant des manchons pourraient aussi appartenir aux pieds 3 avec le même effet. Il faut remarquer que la pièce qui ne porte pas le manchon peut être dépourvue de collerette 6 ou 7 et assemblée tout en étant sensiblement à ses dimensions finales dès avant l'assemblage.

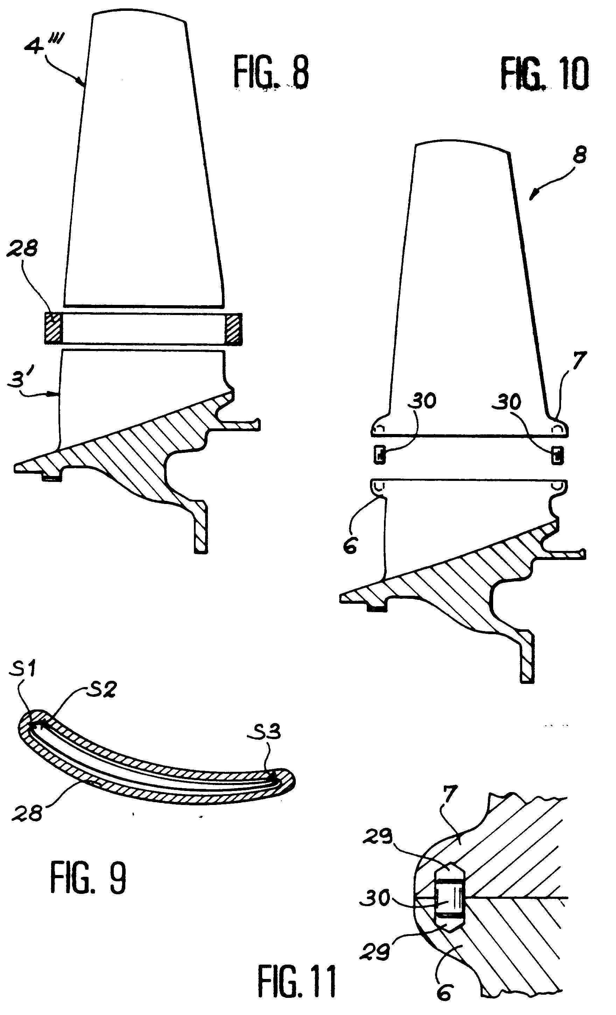

Une autre conception analogue, représentée sur les figures 8 et 9, consiste à assembler le pied (alors référencé par 3') et la pale (alors référencée par 4''') par l'intermédiaire d'un manchon 28 indépendant, que le pied 3' et la pale 4''' touchent chacun par trois facettes S1, S2 et S3 disposées comme précédemment. Le manchon 28 est uni à la pale 4''' par quelques points de soudage ou un moyen du même genre. Les collerettes 6 et 7 sont toutes deux omises dans cette réalisation.

Les conceptions représentées respectivement sur les figures 6 et 7, et 8 et 9, sont particulièrement adaptées à la réparation, car le pied 3' est à ses dimensions finales dès avant l'assemblage.

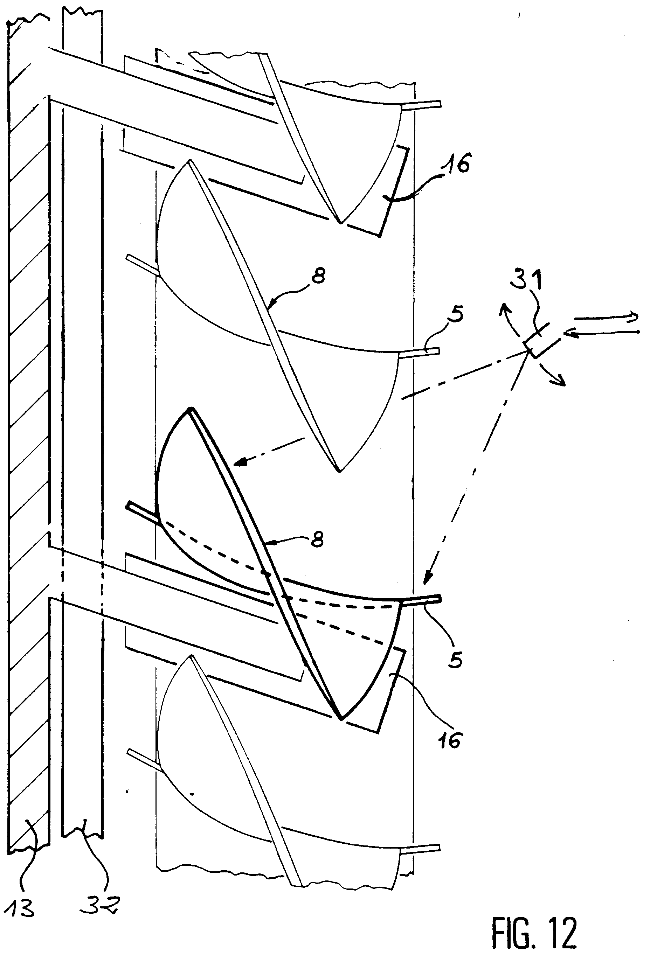

Une dernière idée pour unir les éléments de l'ailette 8 consiste à utiliser les pieds 3 et des pales 4 à collerettes 6 et 7. Elles est illustrée aux figures 10 et 11. Les collerettes 6 et 7 comportent des perçages 29 pour recevoir au moins deux pions de centrage 30.

Pour toutes les conceptions de positionnement des ailettes, décrites ci-dessus, le cycle d'assemblage comporte les séquences suivantes :
a) - positionnement et immobilisation du disque 1 sur le gabarit 10,
b) - positionnement de la totalité des ailettes 8 sur le disque 1, d'une part en faisant coopérer les paires de facettes respectives S1, S2, S3, S4 et S5 de la surface de jonction 5, et d'autre part par le contact de la facette S6 sur l'hémisphère de butée 18,
c) - immobilisation de la totalité des ailettes 8 à assembler sur le disque 1, au moyen des patins 14, et enlèvement des équerres 19 dans le cas où celles-ci sont utilisées,
d) - mise en place des écrans 16 au moyen des patins 15,
e) - réalisations successives des soudures sur les ailettes disposant d'un écran de protection 16,
f) - si besoin, dans le cas d'assemblage d'ailettes consécutives, repositionnement des écrans 16,
g) - réalisation des soudures sur les ailettes disposant d'un écran 16.

La figure 12 illustre le mode d'assemblage caractéristique de l'invention. Un canon à électrons 31 est disposé devant le gabarit 10. Le déplacement relatif de l'axe du faisceau d'électrons permettant de traverser la surface de jonction d'une ailette 8 sur toute sa longueur, est obtenu comme le suggèrent les flèches soit par un mouvement de rotation, soit par un mouvement de translation, soit par une combinaison de ces deux mouvements. Ces mouvements sont définis de manière que l'axe de radiation soit autant que possible orienté dans le sens de l'épaisseur de l'ailette 8, et que la vitesse relative de déplacement du faisceau soit la plus constante possible sur toute la longueur de la jonction, pour optimiser les conditions opératoires de soudage.

Les patins 14 maintiennent le contact de la pale 4 sur le pied 3. Un écran 16 situé derrière l'ailette 8 absorbe les électrons qui ont traversé l'ailette 8 et les empêche donc de chauffer l'ailette 8 voisine. Cependant, les intervalles entre ailettes 8 sont alternativement occupés par un écran 16 et vides. Un écran circulaire 32 en matériau absorbant l'énergie de particules comme les écrans 16 est par ailleurs prévu entre les ailettes 8 et la portion de charpente 13 située juste derrière, pour que cette dernière soit également protégée de l'échauffement. Le canon à électrons 31 est dirigé obliquement, vers un des côté du disque 1, afin que son rayonnement soit autant que possible orienté dans le sens de l'épaisseur de l'ailette 8 et la traverse donc effectivement mais n'atteigne à aucun moment des portions de l'ailette 8 située juste devant celle qui est assemblée.

Quand le soudage d'une ailette est terminé, une rotation est infligée à l'axe 11 et à la charpente 13 pour placer devant le canon à électrons 31 une autre ailette 8. On répète l'opération de soudage avant de passer à une autre ailette 8 jusqu'à ce qu'on ait soudé la moitié des ailettes 8, celles qui sont situées devant un écran 16. On retire alors les écrans 16 pour les placer dans les autres intervalles entre ailettes 8, par lesquels le faisceau d'électrons avait passé. La seconde moitié des ailettes 8 peut alors être exposée au faisceau d'électrons et soudée dans les mêmes conditions que précédemment. Après le montage des pales 4, le procédé est presque entièrement automatique à l'exception de cette étape unique de changement de place des écrans 16, qui est cependant assez rapide. Il est en particulier évident que la régularité de la structure s'accommode d'un faisceau énergétique dont le mouvement de balayage est réglé une fois pour toutes, et de rotations identiques de l'axe 11. La durée totale de l'assemblage n'est que de quelques heures pour un disque complet. On peut ensuite passer à l'usinage des ailettes 8 aux surfaces de jonction 5. Une grande sûreté d'exécution caractérise le procédé, car les déréglages de la position des pales 4 sont à peu près exclus et la localisation de l'échauffement sur les parties à souder limite beaucoup les déformations susceptibles de fausser la forme du disque.

Le faisceau d'électrons peut être remplacé par tout moyen équivalent capable d'apporter suffisamment d'énergie aux surfaces de jonction 5.

## Revendications

1. Procédé d'assemblage par soudage d'un disque (1) de rotor de turbomachine garni d'ailettes (8) composées d'un pied (3) solidaire au disque (1) et de pales (4), caractérisé en ce qu'il consiste à installer le disque et les pales sur un gabarit (10) tournant muni de moyens de fixation (12, 14, 17, 17', 19) ou disque (1) et des pales (4), les pales touchant les pieds (3) à des surfaces de jonction (5) planes, à tourner le gabarit (10) pour placer les ailettes successivement devant un faisceau d'énergie qui traverse les surfaces de jonction et souder les pales aux pieds, des écrans (16) ayant été installés entre les ailettes à assembler et d'autres ailettes pour intercepter le faisceau après qu'il a traversé les surfaces de jonction (5).

2. Procédé d'assemblage d'un disque selon la revendication 1, dans lequel toutes les ailettes doivent être assemblées, caractérisé en ce qu'il consiste à installer les écrans (16) dans une première moitié des invervalles entre les ailettes (8), une seconde moitié des intervalles étant vide, et à faire passer le faisceau à travers les intervalles de la seconde moitié pour assembler une première moitié des ailettes (8), puis à retirer les écrans (16) et à les installer dans la seconde moitié des intervalles, et à faire passer le faisceau à travers les intervalles de la première moitié pour assembler la seconde moitié des ailettes (8).

3. Procédé d'assemblage d'un disque selon l'une quelconque des revendications 1 ou 2, caractérisé en ce que les moyens de fixation comprennent des surfaces ponctuelles (18) sur lesquelles les pales sont appuyées par des facettes (S6) situées sur des endroits opposés aux surfaces de jonction (5).

4. Procédé d'assemblage d'un disque selon l'une quelconque des revendications 1 à 3, caractérisé en ce que les moyens de fixation comprennent des équerres (19) sur lesquelles trois paires de facettes (S1, S2, S3) des pieds (3) et des pales (4), proches des surfaces de jonction, sont appuyées.

5. Procédé d'assemblage d'un disque selon l'une quelconque des revendications 1 à 3, caractérisé en ce que les pales comprennent des rebords (23) qui entourent partiellement une portion des pieds proche des surfaces de jonction, trois facettes des rebords étant appuyées sur trois facettes desdites portions.

6. Procédé d'assemblage d'un disque selon l'une quelconque des revendications 1 à 3, caractérisé en ce que les pales comprennent des manchons (23') qui entourent une portion des pieds proche des surfaces de jonction, trois facettes des manchons étant appuyées sur trois facettes desdites portions.

7. Procédé d'assemblage d'un disque selon l'une quelconque des revendications 1 à 3, caractérisé en ce que les pales (4) sont réunies aux pieds (3) par des manchons (28) qui entourent deux portions des pieds (3) et des pales (4) proches des surfaces de jonction (5), les manchons (28) étant appuyés sur trois facettes (S1, S2, S3) de chacune desdites portions.

8. Procédé d'assemblage d'un disque selon l'une quelconque des revendications 1 à 3, caractérisé en ce que les pales sont reliées aux pieds par des pions de centrage (30).

9. Procédé d'assemblage d'un disque selon l'une quelconque des revendications 1 à 7, caractérisé en ce que le faisceau est dirigé obliquement, vers un des côtés du disque.

## Claims

1. Method of assembling, by welding, a turbomachine rotor disc (1) covered with blades (8) which are composed of a root part (3) integral with the disc (1) and of blade parts (4), characterized in that this method consists in installing the disc and the blade parts on a rotary jig (10) equipped with means (12, 14, 17, 17', 19) for fixing the disc (1) and the blade parts (4), the blade parts touching the root parts (3) at planar joining surfaces (5), in rotating the jig (10) in order, in turn, to place the blades in front of a beam of energy which passes through the joining surfaces and to weld the blade parts to the root parts, screens (16) having been installed between the blades to be assembled and other blades in order to intersect the beam after it has passed through the joining surfaces (5).

2. Method of assembling a disc according to Claim 1, in which method all the blades have to be assembled, characterized in that it consists in installing the screens (16) in a first half of the gaps between the blades (8), a second half of the gaps being empty, and in making the beam pass through the gaps of the second half in order to assemble a first half of the blades (8), then in removing the screens (16) and in installing them in the second half of the gaps, and in making the beam pass through the gaps of the first half in order to assemble the second half of the blades (8).

3. Method of assembling a disc according to either one of Claims 1 and 2, characterized in that the fixing means comprise point surfaces (18) against which the blade parts are pressed via facets (S6) situated at regions away from the joining surfaces (5).

4. Method of assembling a disc according to any one of Claims 1 to 3, characterized in that the fixing means comprise angle brackets (19) against which three pairs of facets (S1, S2, S3) of the root parts (3) and of the blade parts (4), these facets being close to the joining surfaces, are pressed.

5. Method of assembling a disc according to any one of Claims 1 to 3, characterized in that the blade parts comprise rims (23) which partially surround a portion of the blade parts which is close to the joining surfaces, three facets of the rims being pressed against three facets of the said portions.

6. Method of assembling a disc according to any one of Claims 1 to 3, characterized in that the blade parts comprise cuffs (23') which surround a portion of the blade parts which is close to the joining surfaces, three facets of the cuffs being pressed against three facets of the said portions.

7. Method of assembling a disc according to any one of Claims 1 to 3, characterized in that the blade parts (4) are joined to the root parts (3) by cuffs (28) which surround two portions of the root parts (3) and of the blade parts (4), which portions are close to the joining surfaces (5), the cuffs (28) being pressed against three facets (S1, S2, S3) of each of the said portions.

8. Method of assembling a disc according to any one of Claims 1 to 3, characterized in that the blade parts are connected to the root parts by centring heads (30).

9. Method of assembling a disc according to any one of Claims 1 to 7, characterized in that the beam is directed obliquely towards one of the sides of the disc.

## Patentansprüche

1. Verfahren zum Zusammenschweißen einer Turbomaschinenrotorscheibe (1), die mit Schaufeln (8) bestückt ist, die aus einem mit der Scheibe (1) fest verbundenen Fuß (3) und Schaufelblättern (4) zusammengesetzt ist,
**gekennzeichnet durch** die Verfahrensschritte:
Installieren der Scheibe und der Schaufelblätter auf einer drehbaren Lehrvorrichtung (10), die Mittel (12, 14, 17, 17', 19) zum Befestigen der Scheibe (1) und der Schaufelblätter (4) aufweist, wobei die Schaufelblätter die Füße (3) in ebenen Verbindungsflächen (5) berühren,
Drehen der Lehrvorrichtung (10), um die Schaufeln nacheinander vor einem Energiestrahl zu positionieren, der die genannten Verbindungsflächen durchdringt, und
Anschweißen der Schaufelblätter an die Füße, wobei zwischen den zusammenzufügenden Schaufeln und anderen Schaufeln Abschirmblenden (16) montiert wurden, um den Energiestrahl zu unterbrechen, nachdem er die Verbindungsflächen durchdrungen hat.

2. Verfahren zum Zusammenschweißen einer Scheibe nach Anspruch 1, bei dem alle Schaufel zusammengefügt werden müssen,
**dadurch gekennzeichnet,**
daß die Abschirmblenden (16) in einer ersten Hälfte der Zwischenräume zwischen den Schaufeln (8) installiert werden, während eine zweite Hälfte der Zwischenräume leer ist,
daß man den Energiestrahl durch die Zwischenräume der zweiten Hälfte dringen läßt, um eine erste Hälfte der Schaufeln (8) zusammenzufügen,
daß dann die Abschirmblenden (16) zurückgezogen und in der zweiten Hälfte der Zwischenräume montiert werden,
und daß man den Energiestrahl durch die Zwischenräume der ersten Hälfte dringen läßt, um die zweite Hälfte der Schaufeln (8) zusammenzufügen.

3. Verfahren zum Zusammenschweißen einer Scheibe nach einem der Ansprüche 1 oder 2,
**dadurch gekennzeichnet,**
daß die Befestigungsmittel punktuelle Oberflächen (18) umfassen, auf denen sich die Schaufelblätter mit Facetten (S6) abstützen, die sich an von den Verbindungsflächen (5) abgewandten Stellen befinden.

4. Verfahren zum Zusammenschweißen einer Scheibe nach einem der Ansprüche 1 bis 3,
**dadurch gekennzeichnet,**
daß die Befestigungsmittel Winkelstücke (19) umfassen, an denen sich drei in der Nähe der Verbindungsflächen liegende Facettenpaare (S1, S2, S3) der Füße (3) und der Schaufelblätter (4) abstützen.

5. Verfahren zum Zusammenschweißen einer Scheibe nach einem der Ansprüche 1 bis 3,
**dadurch gekennzeichnet,**
daß die Schaufelblätter Randleisten (23) aufweisen, die einen Abschnitt der Füße in der Nähe der Verbindungsflächen teilweise umschließen, wobei diese Randleisten sich mit drei Facetten an drei Facetten der genannten Abschnitte abstützen.

6. Verfahren zum Zusammenschweißen einer Scheibe nach einem der Ansprüche 1 bis 3,
**dadurch gekennzeichnet,**
daß die Schaufelblätter Muffen (23') besitzen, die einen in der Nähe der Verbindungsflächen liegenden Abschnitt der Füße umschließen, wobei drei Facetten der Muffen sich an drei Facetten der genannten Abschnitte abstützen.

7. Verfahren zum Zusammenschweißen einer Scheibe nach einem der Ansprüche 1 bis 3,
**dadurch gekennzeichnet,**
daß die Schaufelblätter (4) mit den Füßen (3) durch Muffen (28) verbunden sind, die zwei in der Nähe der Verbindungsflächen (5) liegende Abschnitte der Füße (3) bzw. der Schaufelblätter (3) umschließen, wobei die Muffen (28) sich an drei Facetten (S1, S2, S3) jedes der genannten Abschnitte abstützen.

8. Verfahren zum Zusammenschweißen einer Scheibe nach einem der Ansprüche 1 bis 3,
**dadurch gekennzeichnet,**
daß die Schaufelblätter mit den Füßen durch Zentrierstifte (30) verbunden sind.

9. Verfahren zum Zusammenschweißen einer Scheibe nach einem der Ansprüche 1 bis 7,
**dadurch gekennzeichnet,**
daß der Energiestrahl schiefwinklig gegen eine der Seiten der Scheibe gerichtet wird.
